# EUROPEAN PATENT APPLICATION

(11) **EP 1 455 463 A2**
(43) Date of publication of application: **08.09.2004**
(21) Application number: 04004681.5
(22) Date of filing: 01.03.2004
(51) Int. Cl.: H04B 7/00

(54) **Radio microphone set with digital transmission and analog signal correction**

(30) Priority: 05.03.2003 IT BO20030117
(71) Applicant: A.E.B. S.R.L., 40056 Crespellano (Prov.of Bologna) (IT)
(72) Inventor: Vicari, Arturo, 40100 Bologna (IT)
(74) Representative: Modiano, Guido, Dr.-Ing.

(57) **Abstract**

A radio microphone set with digital transmission and analog signal correction (1), comprising a radio-frequency transmitter (2) and a radio-frequency receiver (3), provided respectively with an encoding unit comprising an analog/digital signal converter (7), driven by an audio signal detector (2a) and with a signal decoding unit driving sound diffusion elements (4); the transmitter (2) having a first line and a second line that lead to respective transmission components at different frequencies for the digital (9a) and analog (11a) signals; the receiver (3) having respective lines originating from digital and analog signal receiving components with incorrect signal detection device (19), a digital/analog signal converter (15) and a switch (20) adapted to send to elements (4) signal from converter (15), replacing incorrect signal (16a) with analog signal (18a).

## Description

The present invention relates to a radio microphone set with digital transmission and analog signal correction.

A radio microphone set is a highly specialized combination of RF (radio-frequency) electronics and audio, conceived in order to replace the cable normally used to connect a microphone or a musical instrument to a sound diffusion and amplification system. A radio microphone set is essentially constituted by two components: the RF transmitter and the RF receiver. The sound source may be constituted by a microphone or by a suitable musical instrument, such as for example an electric guitar.

Currently, almost all existing microphone sets use electronic components that are essentially of the analog type both for conditioning the weak sound signal and for transmitting and receiving it via radio-frequency. In order to improve performance and approximate the operation of wired microphones, analog radio microphone sets use filtering, compression/expansion, and preemphasis and deemphasis techniques. These are refinements aimed at minimizing the noise introduced by the radio channel due to background noise and to interference. However, some of the mentioned techniques, such as for example the compression/expansion technique (known as "companding"), introduce non-linear elements in the audio chain, giving rise to alterations and distortions of the original signal. For example, in the presence of pulse signals, as can occur during the attack of a note, the intervention time of the circuits and their limited instantaneous dynamic range change the characteristics of the sound decisively.

Professional sets for transmitting digitized sound by radio in real time are not very widespread, mainly due to the unavoidable presence of errors in data transmission/reception. The remedies to this problem, besides, are not particularly effective.

In a digitized audio signal, a brief disturbance that causes the corruption of some bits in the sequence in fact does not entail a simple degradation of the signal/noise ratio, as occurs in analog transmissions, but produces a true discontinuity in sound reconstruction during conversion from digital to analog. There are interpolation techniques and algorithms that have been studied specifically in order to alleviate this problem, but they are greatly limited by the number of corrupt bits that it is possible to reconstruct without producing detectable alterations of the original sound.

The requirements of operation in real time set severe constraints to the possibility to use effective error-correction algorithms and/or protocols. During a live performance, the maximum tolerable delay between the instant when the sound is emitted and the instant when said sound reaches the ear of the musician is in fact in the order of a few milliseconds. Some techniques normally used in modem data transmissions divide the information stream into packets and add control information in order to facilitate the detection of errors and allow their correction within certain limits. In case of irreparable errors, retransmission of the corrupt packets is forced. These techniques have several disadvantages, since they increase the overall complexity of the system, force higher transmission rates, and most of all are not capable of ensuring that a packet arrives correctly within a guaranteed time.

The reserved bandwidth increases disproportionately if redundancy techniques are adopted in information transmission, such as for example the use of packets and the addition of control characters. The bandwidth occupation of a radio-frequency transmission must be kept small both because of statutory requirements and in order to avoid preventing the simultaneous use of a plurality of systems operating on adjacent radio channels. There are digital signal compression algorithms (such as for example the M-PEG standard) which, by reducing the density of the information to be transmitted, keep the bandwidth occupation limited; however, they generate unacceptable delays and distortions and also increase the complexity and cost of the system.

Techniques known as "diversity", normally used to reduce the effect of a sudden lack of the radio signal caused by disruptive interference between multiple paths, do not provide sufficient assurances of reliability for professional use of the set. The principle of diversity techniques is the simultaneous use of two receivers and the choice at each instant of the receiver that has the best signal/noise ratio. However, it has been demonstrated that in digital transmissions at very high frequencies, especially when the transmitter is moving rapidly, the receiving antennas pass so swiftly through no-signal situations that it becomes impossible to perform perfect reconstruction without hearing unpleasant transient switching noises.

The aim of the present invention is to obviate the cited drawbacks and meet the mentioned requirements, by providing a radio microphone set with digital transmission and analog signal correction in which interference on the digital signal is compensated by corrections using an analog support signal.

Within this aim, an object of the present invention is to provide a structure that is simple, relatively easy to provide in practice, safe in use, effective in operation, and has a relatively low cost.

This aim and this and other objects that will become better apparent hereinafter are achieved by the present radio microphone set with digital transmission and analog signal correction, comprising a radio-frequency transmitter and a radio-frequency receiver, provided respectively with an encoding unit driven by an audio signal detector and with a signal decoding unit that drives sound diffusion elements, characterized in that said encoding unit comprises an analog/digital signal converter, in that said transmitter has a first line and a second line that lead to respective transmission components at different frequencies for the digital signal and for the analog signal, in that the receiver has respective lines that originate from components for receiving the digital and analog signals, in that in the digital line a device for detecting an incorrect signal and a digital/analog signal converter are provided, and in that said lines lead to a switch that is driven by said detection device and is suitable to send to said sound diffusion elements the signal that arrives from the converter, replacing the incorrect signal with the analog signal.

Further characteristics and advantages of the present invention will become better apparent from the following detailed description of a preferred but not exclusive embodiment of a radio microphone set with digital transmission and analog signal correction, illustrated by way of non-limiting example in the accompanying drawings, wherein:

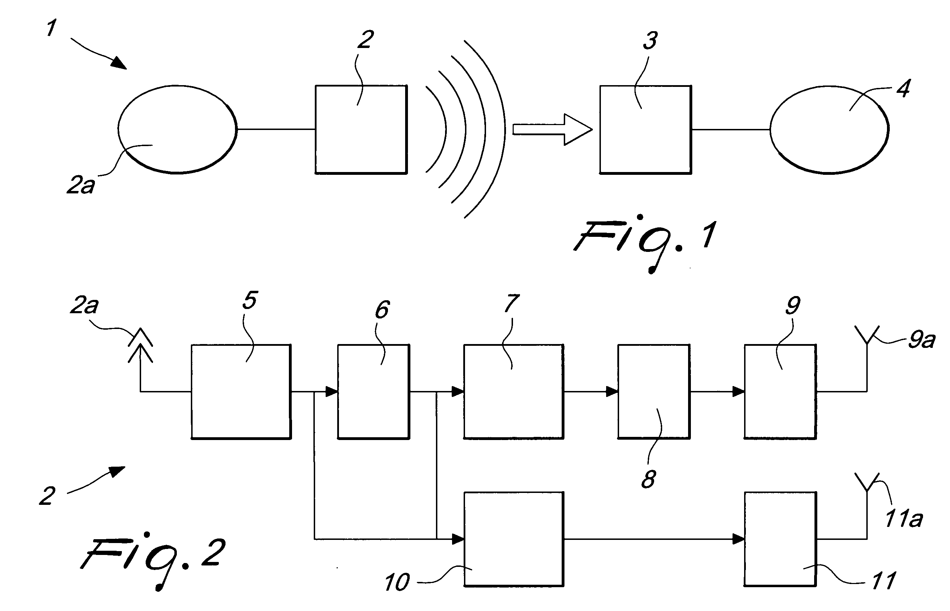

Figure 1 is a perspective view of a possible configuration of a radio microphone set with digital transmission and analog signal correction;
Figure 2 is a functional block diagram of a transmitter of a radio microphone set with digital transmission and analog signal correction;

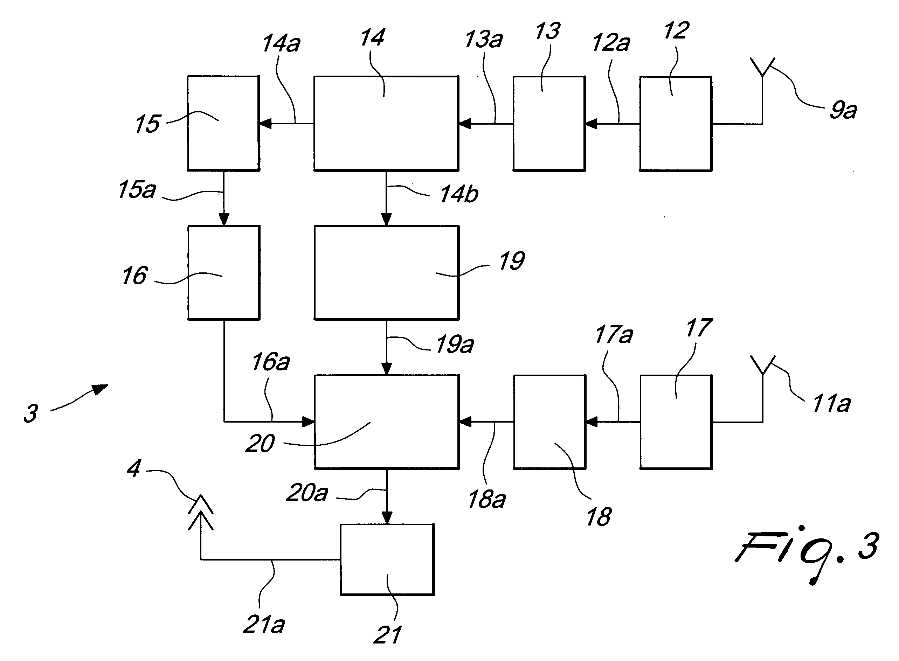

Figure 3 is a functional block diagram of a receiver of a radio microphone set with digital transmission and analog signal correction;

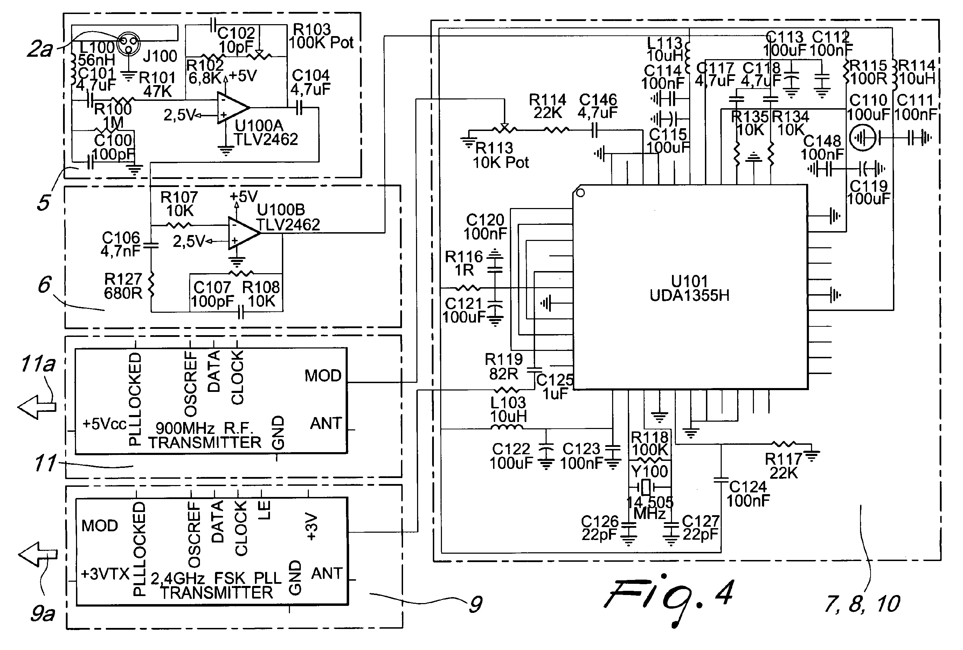

Figure 4 is an electrical diagram of one of the possible circuit embodiments of a transmitter of a radio microphone set with digital transmission and analog signal correction;

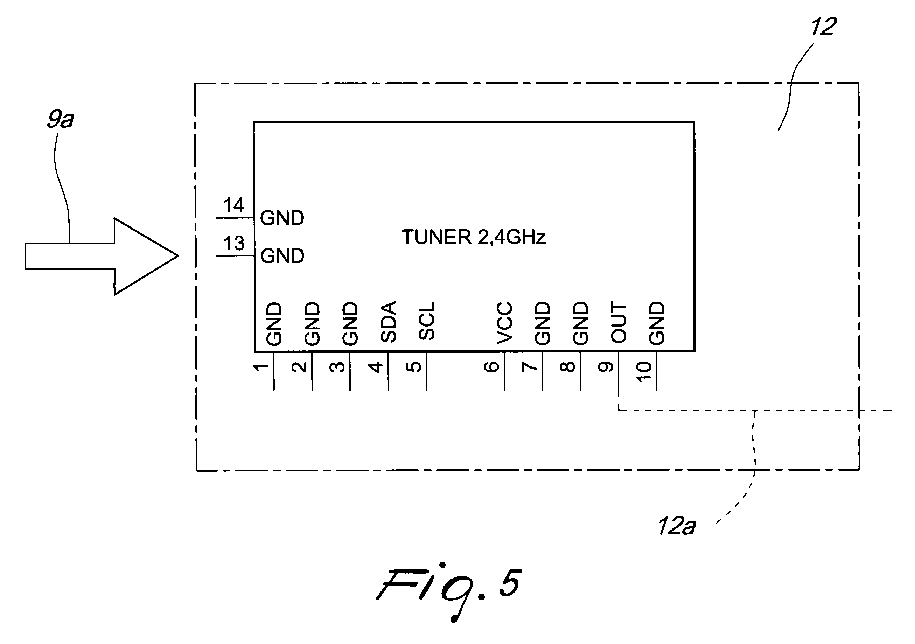

Figure 5 is an electrical diagram of one of the possible circuit embodiments of a 2.4 GHz tuner of a radio microphone set with digital transmission and analog signal correction;

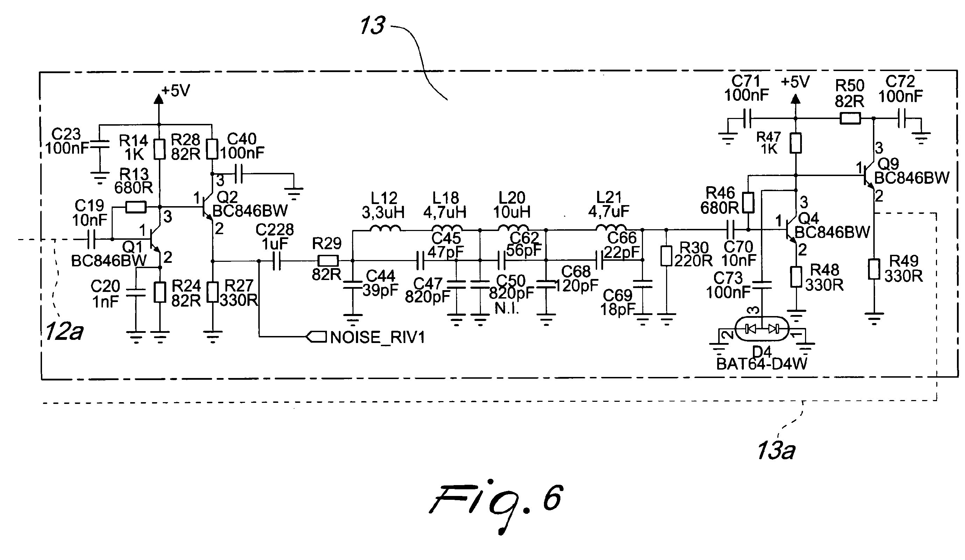

Figure 6 is an electrical diagram of one of the possible circuit embodiments of a data shaping system of a radio microphone set with digital transmission and analog signal correction;

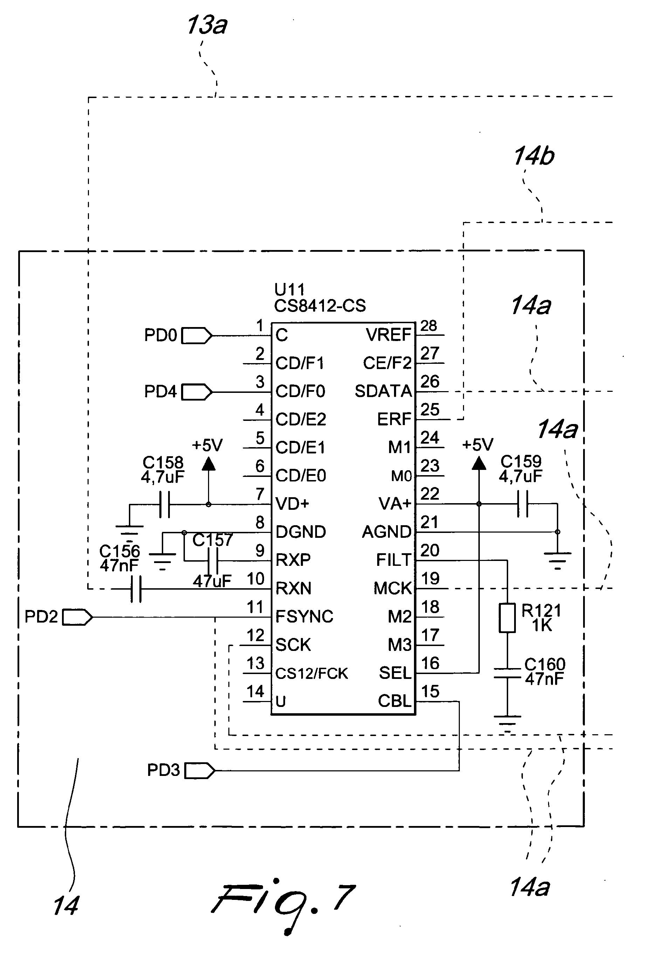

Figure 7 is an electrical diagram of one of the possible circuit embodiments of a data receiver and decoder of a radio microphone set with digital transmission and analog signal correction;

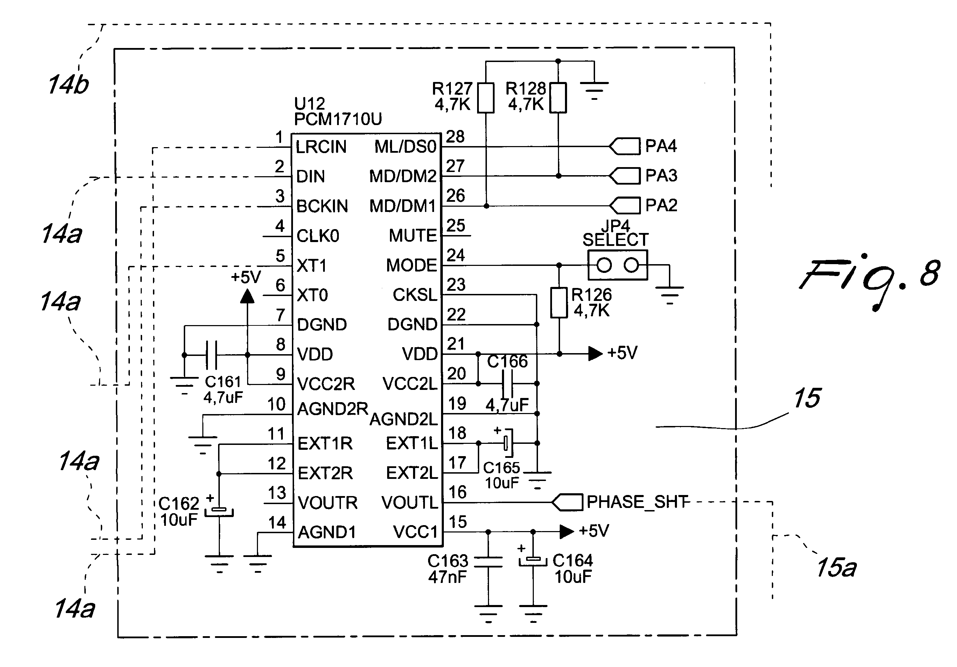

Figure 8 is an electrical diagram of one of the possible circuit embodiments of a digital/analog signal converter of a radio microphone set with digital transmission and analog signal correction;

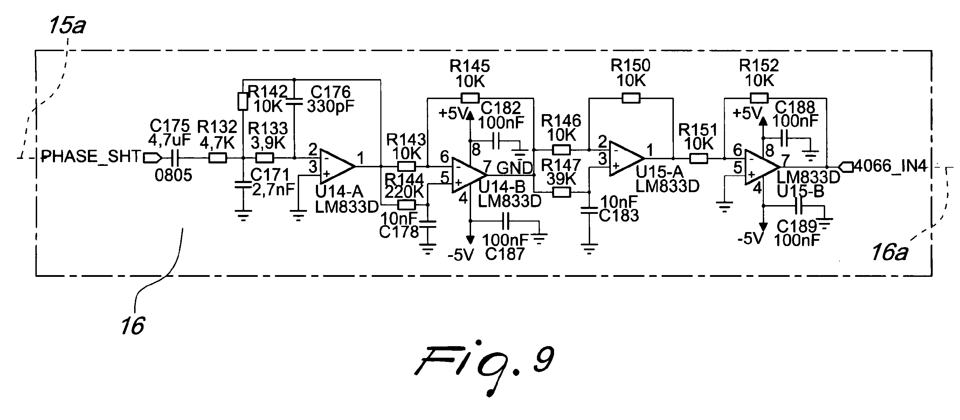

Figure 9 is an electrical diagram of one of the possible circuit embodiments of an audio rephasing unit of a radio microphone set with digital transmission and analog signal correction;

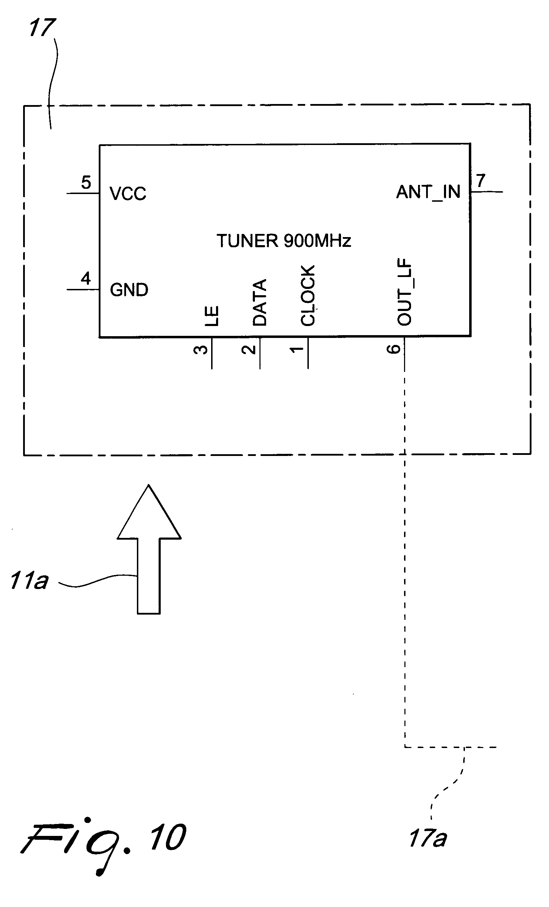

Figure 10 is an electrical diagram of one of the possible circuit embodiments of a 900-MHz tuner of a radio microphone set with digital transmission and analog signal correction;

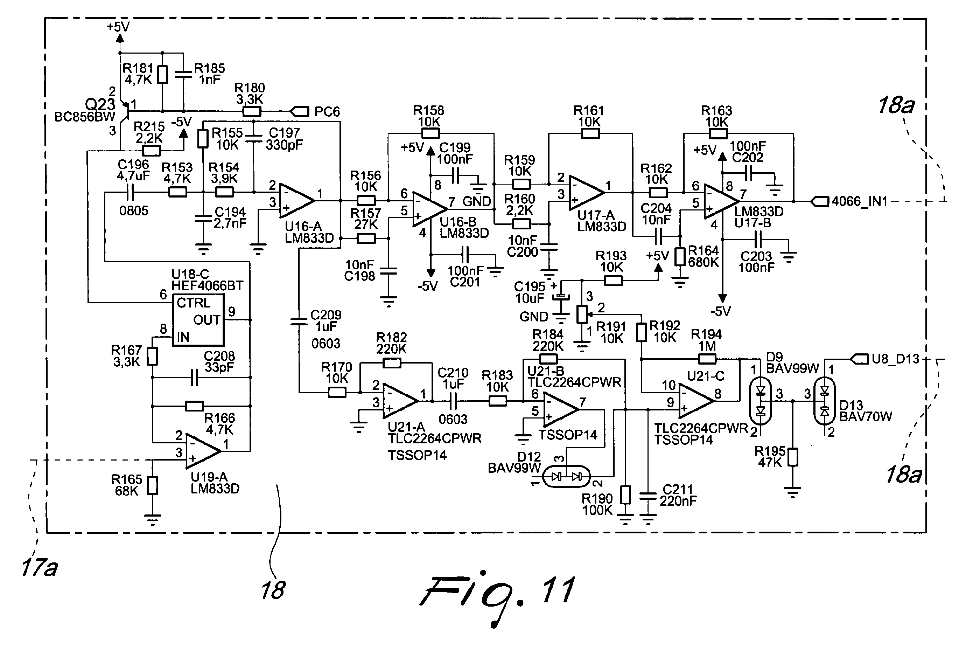

Figure 11 is an electrical diagram of one of the possible circuit embodiments of an audio rephasing unit of a radio microphone set with digital transmission and analog signal correction;

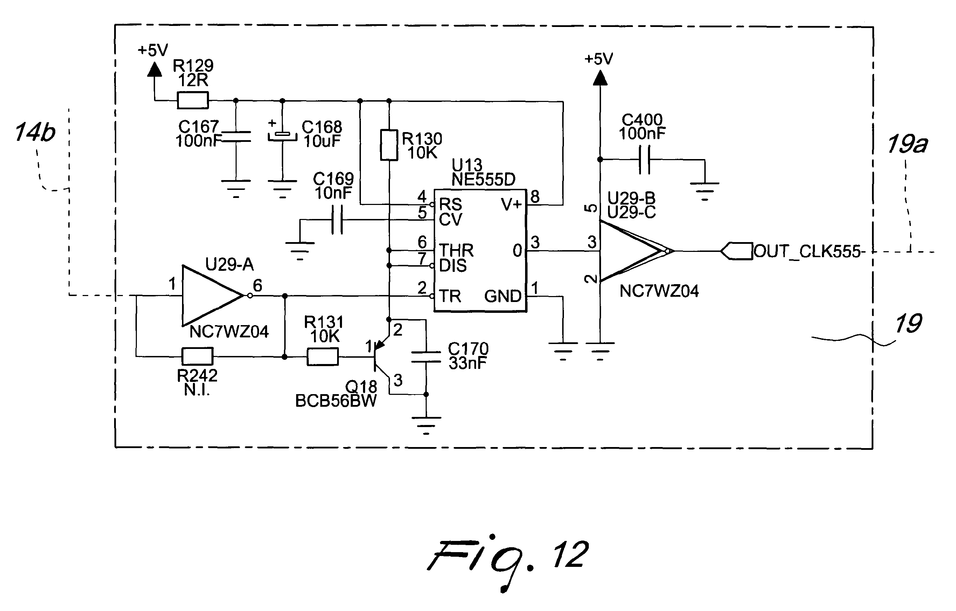

Figure 12 is an electrical diagram of one of the possible circuit embodiments of an error control element of a radio microphone set with digital transmission and analog signal correction;

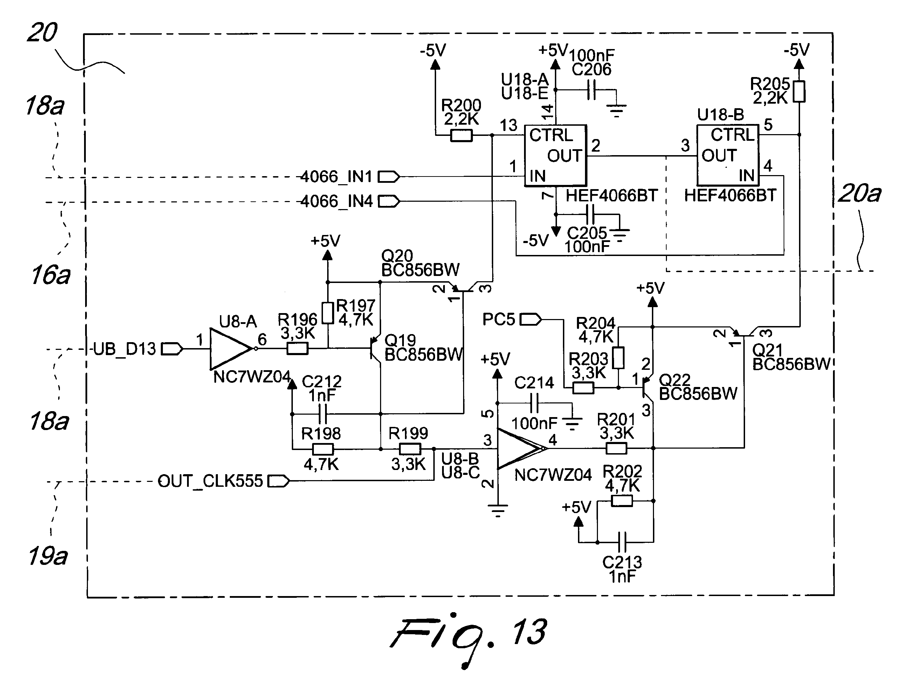

Figure 13 is an electrical diagram of one of the possible circuit embodiments of a switching element of a radio microphone set with digital transmission and analog signal correction;

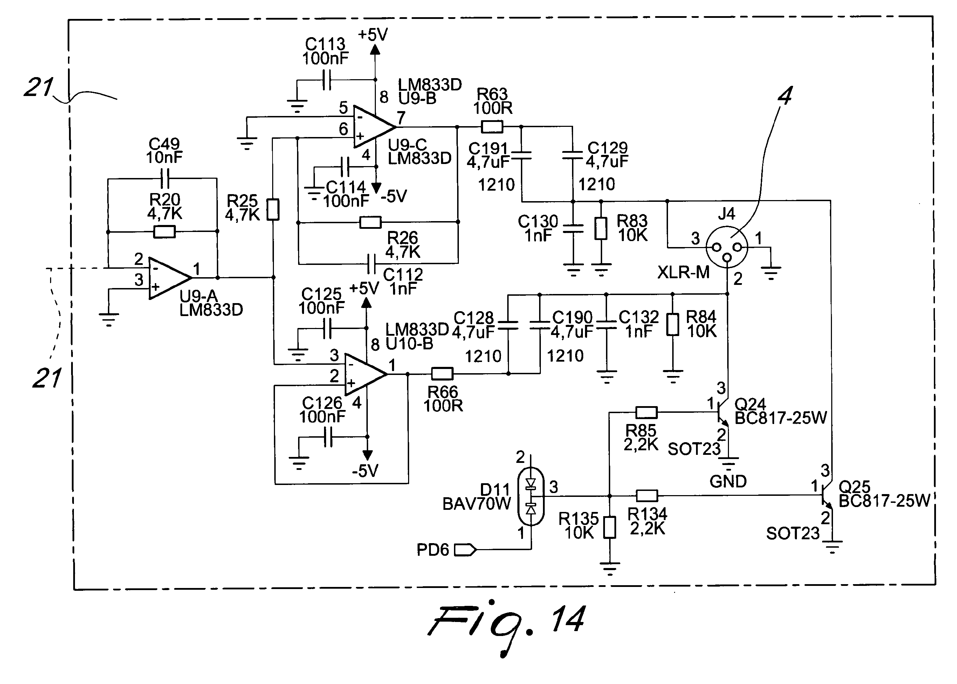

Figure 14 is an electrical diagram of one of the possible circuit embodiments of a deemphasis unit of a radio microphone set with digital transmission and analog signal correction.

With reference to the figures, the reference numeral 1 generally designates a radio microphone set with digital transmission and analog signal correction. A radio microphone is constituted by a transmitter 2, driven by an audio signal acquisition unit 2a. The transmitted signal reaches a receiver 3, which after processing it, sends it to the sound diffusion units 4.

Each transmitter 2 comprises two lines, both of which have in common the first stage, constituted by an input preamplifier 5, which receives the signal that arrives from the audio signal acquisition unit 2a; this element is conceived in order to adapt the low-frequency stage of the transmitter to various types of audio signal source, such as microphones and/or musical instruments. The preamplifier 5, along the first line that constitutes it, feeds a preemphasis unit 6, which amplifies high audio frequencies (in this manner it is possible to increase considerably the signal/noise ratio after attenuating said high frequencies during reception with the same gradient).

The signal in output from the unit 6 accesses an analog/digital signal converter 7 and then reaches a so-called data encoder 8. The signal in output from the encoder 8 enters a transmission component 9, by means of which it is transmitted at the frequency of 2.4 GHz in the form of a digital radio signal 9a.

The preamplifier 5, along the second line, also feeds a delay unit 10, by means of which the analog audio is subjected to a time delay so as to have the same phase as the digital signal and is then introduced in a transmission component 11 at the frequency of 900 MHz and transmitted in the form of an analog radio signal 11a.

The receiver 3 comprises two lines: the first line has, as its initial stage, a 2.4 GHz tuner 12, which receives the digital radio signal 9a and converts it into an electric signal 12a that accesses a data shaping unit 13 constituted by a Gaussian filter; such shaping unit 13 is designed to filter the signal that arrives from the tuner 12 and to bring the amplitude of the signal to values that can be processed by the following devices.

An output signal 13a reaches a data receiver and decoder 14, which receives the signal in baseband, decodes it and adapts it to the format required by the next block, and also interprets the quality of the received signal, generating a pulse when its quality drops below a certain level. The data decoder and receiver 14 has two outputs: a first output 14a feeds a digital/analog signal converter 15, the output 15a of which in turn feeds an audio rephasing unit 16, which is designed to ensure that the two signals that reach the subsequent logic elements adapted to perform switching are perfectly in phase with each other: it can be constituted by a series of active filters provided by means of operational amplifiers in an all-pass configuration.

The second line of the receiver 3 has, as its initial stage, a 900-MHz tuner 17, which receives the analog radio signal 11a and converts it into an electrical signal 17a; said signal enters a second audio rephasing unit 18, which like the audio rephasing unit 16 is designed to ensure that the two signals are perfectly in phase with each other and is constituted by a series of active filters provided by means of operational amplifiers in an all-pass configuration.

The signal 14b that arrives from the second output of the data decoder and receiver 14 is controlled by an error control element or detection device 19, which is designed to generate, in case of error, the control signal for a switch 20, which receives the signals that arrive from the two lines, the digital one 16a and the analog one 18a. The resulting signal 20a, in output from the switch 20, is processed by a deemphasis unit 21, which reestablishes the equalization that the audio signal had originally (i.e., before the preemphasis unit 6 in the transmitter 2).

The operation of the invention is as follows: when a sound is detected by the audio signal acquisition unit 2a, it is converted into an electrical signal and is amplified appropriately by means of the preamplifier 5. In a first line, the signal passes through the preemphasis unit 6, the converter 7 and the data encoder 8 and is transmitted by the transmission component 9 at the frequency of 2.4 GHz in the form of a digital radio signal 9a. In a second line, the signal is phase-adjusted by means of the delay unit 10 and transmitted in the form of an analog radio signal 11a by means of the transmission component 11 at the frequency of 900 MHz.

The signal 9a is picked up by a first line of the receiver 3 by means of the 2.4-GHz tuner 12 and is then filtered by the shaping unit 13 and decoded and adapted to the format required by the next block by a data receiver and decoder 14, which also interprets the quality of the received signal, generating a pulse when its quality drops below a certain level. The digital signal that arrives from an output 14a is converted into analog form by the converter 15 and rephased by the rephasing unit 16.

The signal 11 a is picked up by a second line of the receiver 3 by means of the 2.4-GHz tuner 17 and is then rephased by the rephasing unit 18.

The pulse 14b that indicates that the quality of the digital signal is low passes through the error control element or detection device 19, which drives the switch 20, the inputs of which receive the signals 16a and 18a, keeping the output 20a exclusively dependent on the signal 16a except in the low-quality intervals, in which it is replaced with the signal 18a. The correct signal 20a passes through the deemphasis unit 21 and then feeds the sound diffusion units 4 either directly or with the interposition of equalization and amplification systems.

It has thus been shown that the invention achieves the intended aim and objects.

The invention thus conceived is susceptible of numerous modifications and variations, all of which are within the scope of the appended claims.

For example, the circuit characterization of the components is merely an indication and substantially any component can be provided by means of different structures and different constituting elements.

All the details may further be replaced with other technically equivalent ones.

In the embodiments cited above, individual characteristics, given in relation to specific examples, may actually be interchanged with other different characteristics that exist in other embodiments.

It is hereby inherently disclaimed any subject matter that is already known at the date of the filing of the present disclosure.

In practice, the materials used, as well as the shapes and the dimensions, may be any according to requirements without thereby abandoning the scope of the protection of the appended claims.

The disclosures in Italian Patent Application No. BO2003A000117 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A radio microphone set with digital transmission and analog signal correction, comprising a radio-frequency transmitter (2) and a radio-frequency receiver (3), provided, respectively, with an encoding unit (8) driven by an audio signal detector (2a) and with a signal decoding unit (14) that drives sound diffusion elements (4), **characterized in that** said encoding unit comprises an analog/digital signal converter (7), **in that** said transmitter (2) has a first line and a second line that lead to respective transmission components at different frequencies for the digital signal (9a) and for the analog signal (11a), **in that** the receiver (3) has respective lines that originate from components for receiving the digital signal (9a) and the analog signal (11a), **in that** in the line for the digital signal a device (19) for detecting an incorrect signal (14b) and a digital/analog signal converter (15) are provided, and **in that** said lines lead to a switch (20) that is driven by said detection device (19) and is suitable to send to said sound diffusion elements (4) the signal that arrives from the converter (15), replacing an incorrect signal (16a) with the analog signal (18a).

2. The set according to claim 1, **characterized in that** said transmitter (2) has a first preamplification stage (5) in input.

3. The set according to one or more of the preceding claims, **characterized in that** said first line of the transmitter (2) comprises a preemphasis unit (6).

4. The set according to one or more of the preceding claims, **characterized in that** said first line of the transmitter (2) comprises an analog/digital signal converter (7).

5. The set according to one or more of the preceding claims, **characterized in that** said first line of the transmitter (2) comprises a data encoder (8).

6. The set according to one or more of the preceding claims, **characterized in that** said first line of the transmitter comprises a component (9) for transmission at the frequency of 2.4 GHz.

7. The set according to one or more of the preceding claims, **characterized in that** said second line of the transmitter (2) comprises a delay unit (10), the output of which drives a component (11) for transmission at the frequency of 900 MHz.

8. The set according to one or more of the preceding claims, **characterized in that** said digital signal line of the receiver (3) comprises a 2.4-GHz tuner (12).

9. The set according to one or more of the preceding claims, **characterized in that** said digital signal line of the receiver (3) comprises a data shaping unit (13).

10. The set according to one or more of the preceding claims, **characterized in that** said digital signal line of the receiver (3) comprises a data receiver and decoder (14) that generates a pulse when the quality of the signal (13a) drops below a certain preset level.

11. The set according to one or more of the preceding claims, **characterized in that** said digital signal line of the receiver (3) comprises a digital/analog signal converter (15).

12. The set according to one or more of the preceding claims, **characterized in that** said digital signal line of the receiver (3) comprises an audio rephasing unit (16).

13. The set according to one or more of the preceding claims, **characterized in that** said analog signal line of the receiver (3) comprises a 900-MHz tuner (17).

14. The set according to one or more of the preceding claims, **characterized in that** said analog signal line of the receiver (3) comprises an audio rephasing unit (18).

15. The set according to one or more of the preceding claims, **characterized in that** said receiver (3) comprises a switch (20) with two signal inputs, to which the outputs of the audio rephasing unit (16) of the digital signal line and the audio rephasing unit (18) of the analog signal line are connected, and a control input, to which the output of the incorrect signal detection device (19) is connected.

16. The set according to one or more of the preceding claims, **characterized in that** said receiver (3) comprises a single terminal stage that is constituted by a deemphasis unit (21).
